# EUROPÄISCHE PATENTANMELDUNG

(11) **EP 3 769 928 A1**
(43) Veröffentlichungstag der Anmeldung: **27.01.2021**
(21) Anmeldenummer: 19020440.4
(22) Anmeldetag: 22.07.2019
(51) Int. Cl.: B29C 45/17, B29C 45/73, B29K 105/04

(54) **OPTIMIERUNG VON OBERFLÄCHEN VON SPRITZGUSSTEILEN**

(71) Anmelder: Linde GmbH, 82049 Pullach (DE)
(72) Erfinder: Heninger, Rolf, 85635 Höhenkirchen-Siegertsbrunn (DE); Praller, Andreas, 82110 Germering (DE); Szych, Pawel, 81241 München (DE)
(74) Vertreter: Gellner, Bernd

(57) **Zusammenfassung**

Die Erfindung betrifft ein Verfahren zum Herstellen eines Formteils, aufweisend die Schritte: Bereistellen eines Materials (10), das ein Polymer aufweist; Erwärmen eines Werkzeugs (11), das eine Kavität (12) zur Aufnahme des Materials (10) aufweist, durch Einleiten eines fluiden Mediums (13) in die Kavität (12), wobei das Medium (13) zumindest einen der folgenden Stoffe aufweist: CO₂, N₂, Ar; und Schmelzen des Materials (10) und Einleiten des Materials (10) in die Kavität (12) des Werkzeugs (11) zum Ausbilden des Formteils.

## Beschreibung

Die Erfindung betrifft ein Verfahren zum Herstellen eines Formteils aus einem polymerhaltigen Material mittels Spritzgießen.

Spritzgussteile weisen oft unerwünschte Strukturen auf der Oberfläche auf, wie z.B. Schlieren, die z. B. durch Scherung enstehen, z. B. aufgrund bereits auf der Werkzeugoberfläche verfestigter Kunststoffe. Weitere unerwünschte Effekte sind Bindenähte, wenn sich zwei Strömungsfronten treffen, oder Einfallstellen.

Diese unerwünschten Effekte werden noch gravierender, wenn das Kunststoffteil eine mikrozelluläre Schaumstruktur im Kern, aber eine kompakte Beschaffenheit an der Oberfläche aufweisen soll. Mikroblasen, die mit der Formoberfläche in Kontakt kommen, werden gedehnt und führen zu ausgeprägten Schlieren, die dem Spritzgussteil eine optisch unattraktive äußere Erscheinung verleihen.

Weiterhin ist es wünschenswert, sehr feine Oberflächenstrukturen, die in den Formstahl integriert sind, wie z.B. Körnungen, reproduzieren zu können.

Durch die Erwärmung der Werkzeugoberfläche vor dem Einspritzen des Werkstoffes ist sowohl die Vermeidung von unerwünschten Oberflächenstrukturen als auch die Reproduktion der gewünschten Oberflächenstrukturen möglich. Dabei wird das Polymer bzw. Spritzgussmaterial durch die Formwand erwärmt, was zu einer Verringerung der Polymerviskosität führt, die das Risiko von Schereffekten ausschließt bzw. minimiert.

Aus dem Stand der Technik sind diesbezüglich das Erwärmen von Formen, insbesondere von Formen für den Kunststoffspritzguss, mit z.B. Heißwasser, Heißöl, Dampf, Induktion oder Heizkeramik, bekannt, wobei das Erwärmen erfolgt, bevor die Polymerschmelze in die Kavität eingespritzt wird. Diese Technologien werden oft als "variothermes Spritzgießen" bezeichnet.

Ein Verfahren, bei dem nur die Oberfläche der Kavität über ein heißes Fluid erwärmt werden soll, ist z.B. aus der DE102005022479B3 bekannt.

Die derzeit genutzten Heiztechnologien haben jedoch zum Nachteil, dass in der Regel ein vergleichsweise hoher Energieverbrauch vorliegt, da der Werkstoff der Spritzgussform in der Regel eine große thermische Masse darstellt. Zudem muss das Werkzeug Zyklus für Zyklus erwärmt und gekühlt werden. Beheizbare Werkzeuge bzw. Formen und Formeinsätze erfordern in der Regel eine komplexe Konstruktion und sind damit aufwendig in der Herstellung. Durch das Heizen wird zudem der Prozess komplexer und es liegen in der Regel lange Aufheizzeiten vor. Des Weiteren können sich geometrische Einschränkungen (z. B. Größe, Form) aufgrund der Beheizbarkeit des Werkzeuges ergeben. Schließlich kann es auch zum Verstopfen etwaiger Temperierkanäle des Werkzeuges kommen.

Hiervon ausgehend liegt der vorliegenden Erfindung die Aufgabe zugrunde, ein Verfahren eingangs genannter Art weiter zu verbessern.

Diese Aufgabe wird durch ein Verfahren mit den Merkmalen des Anspruch 1 gelöst.

Vorteilhafte Ausführungsformen der Erfindung sind in den Unteransprüchen angegeben und werden nachfolgend beschrieben.

Gemäß Anspruch 1 wird ein Verfahren zum Herstellen eines Formteils offenbart, wobei das Verfahren die Schritte aufweist:
- Bereitstellen eines Materials, das ein Polymer aufweist,
- Erwärmen einer Innenoberfläche des Werkzeugs, die eine Kavität zur Aufnahme des Materials begrenzt, durch Einleiten eines erwärmten fluiden Mediums in die Kavität, wobei das Medium zumindest einen oder mehrere der folgenden Stoffe aufweist: Kohlenstoffdioxid (CO₂), Stickstoff (N₂), Argon (Ar), und
- Einleiten des geschmolzenen Materials in die Kavität des Werkzeugs zum Ausbilden des Formteils, und zwar nach dem Einleiten des fluiden Mediums in die Kavität oder während des Einleitens des fluiden Mediums in die Kavität.

Die vorliegende Erfindung verfolgt somit insbesondere die Idee, das Innere der geschlossenen Kavität mit einem heißen fluiden Medium, insbesondere mit einem Heißgas, zu erwärmen, so dass eine möglichst gute Aufheizrate realisiert wird.

Gemäß einer bevorzugten Ausführungsform des Verfahrens ist das Medium beim Einleiten in die Kavität gasförmig oder überkritisch.

Weiterhin ist gemäß einer bevorzugten Ausführungsform des Verfahrens vorgesehen, dass der mindestens eine Stoff (z.B. CO₂, N₂ oder Ar) in dem fluiden Medium mit einem Gehalt von zumindest 90 Vol.-%, insbesondere zumindest 95 Vol.-%, insbesondere zumindest 99 Vol.-%, vorliegt. Sofern das fluide Medium mehrere der genannten Stoffe aufweist, ist gemäß einer Ausführungsform der Erfindung vorgesehen, dass diese Stoffe zusammengenommen in dem fluiden Medium mit einem Gehalt von zumindest 90 Vol.-%, insbesondere zumindest 95 Vol.-%, insbesondere zumindest 99 Vol.-%, vorliegen.

Gemäß einer Ausführungsform des Verfahrens ist insbesondere vorgesehen, dass das fluide Medium ein Gemisch bzw. Gasgemisch ist, aufweisend einen, mehrere (in beliebiger Kombination) oder alle der folgenden Stoffe: CO₂, N₂, Ar.

Weiterhin ist gemäß einer Ausführungsform des Verfahrens vorgesehen, dass das fluide Medium bzw. Gemisch zusätzlich Sauerstoff mit einem Gehalt aufweist, der kleiner oder gleich 10 Vol.-% ist, insbesondere kleiner oder gleich 5 Vol.-%, insbesondere kleiner oder gleich 2 Vol.-%.

Das fluide Medium bzw. Gemisch aufweisend einen oder mehrere der Stoffe CO₂, N₂, Ar (siehe oben) kann z.B. in Luft mit einem verbleibenden Sauerstoffgehalt von 0 bis 10 Vol.-%, vorzugsweise 0 bis 5 Vol.-%, vorzugsweise 0 bis 2 Vol.-%, eingemischt sein.

Weiterhin kann gemäß einer Ausführungsform der Erfindung vorgesehen sein, dass das fluide Medium (insbesondere bis auf geringfügige Verunreinigungen) durch einen der Stoffe: CO₂, N₂, Ar gebildet ist.

Für eine effiziente und schnelle Erwärmung der Kavität des Werkzeugs wird ein fluides Medium bzw. Gas mit einer hohen Temperatur, einer hohen spezifischen Wärmekapazität cₚ und einer hohen Dichte bzw. einer hohen Masse bevorzugt. Der Druck sollte nicht zu niedrig sein, um eine hohe Gasdichte und einen hinreichenden Durchfluss zu erhalten, aber es gibt Einschränkungen durch die Form selbst, die in der Regel nicht gasdicht ist und somit mit steigendem Gasdruck Leckagen und Verluste verursacht. Dies führt zu einem höheren Gasverbrauch und einer langsameren Erwärmung der Innenoberfläche der Kavität.

Gemäß einer bevorzugten Ausführungsform des Verfahrens wird daher CO₂ als Medium zum Heizen des Werkzeugs verwendet. Während sich die cₚ-Werte von CO₂ und N₂ nicht in besonderem Maße unterscheiden, hat CO₂ bei typischen und realistischen Temperaturen und Drücken eine höhere Dichte, z.B. bei 300 °C und 10 bar beträgt die Dichte von CO₂ 9,27 kg/m³, während die Dichte von N₂ 5,85 kg/m³ beträgt.

Weiterhin ist gemäß einer Ausführungsform des Verfahrens vorgesehen, dass das fluide Medium beim Einleiten in die Kavität eine Temperatur im Bereich von 150°C bis 600 °C, insbesondere im Bereich von 200°C bis 400 °C, aufweist.

Weiterhin ist gemäß einer Ausführungsform des Verfahrens vorgesehen, dass der Druck des fluiden Mediums in der Kavität des Werkzeugs im Bereich von 1 bar bis 40 bar liegt, insbesondere im Bereich von 5 bar bis 30 bar, insbesondere im Bereich von 10 bar bis 25 bar.

Weiterhin ist gemäß einer Ausführungsform des Verfahrens vorgesehen, dass das in die Kavität eingeleitete fluide Medium durch die Kavität strömt und dabei die Innenoberfläche der Kavität bzw. des Werkzeugs erwärmt und die Kavität über die Werkzeugtrennlinie oder zumindest eine Entlüftungsöffnung verlässt.

Die z. B. am Ende des Strömungsweges des geschmolzenen Materials vorgesehene Entlüftungsöffnung kann mit einem Entlüftungsventil verschließbar sein. Dadurch kann der gewünschte Druck im Werkzeug gesteuert werden. Der Druck muss nicht stabil sein, kann sich aber während der Material- bzw. Polymereinspritzung ändern, z.B. kann er abnehmen. Das Entlüftungsventil kann z. B. abwechselnd öffnen und schließen.

Weiterhin ist gemäß einer bevorzugten Ausführungsform des Verfahrens vorgesehen, dass das heiße Medium außerhalb des Werkzeugs erzeugt wird und zwar bevorzugt in der Nähe des Werkzeugs. Die Beheizung des Mediums kann z.B. mit einem elektrischen Heizgerät, einer Heizkeramik oder anderen Wärmequellen erfolgen.

Weiterhin ist gemäß einer Ausführungsform des Verfahrens vorgesehen, dass das Medium über zumindest ein Einlassventil und einen Injektor in die Kavität eingeleitet wird. Das Einlassventil kann z.B. ein Magnetventil oder ein pneumatisch betätigtes Ventil sein. Der Injektor kann ähnlich den Injektoren für die Gasinjektionstechnik aufgebaut sein und weist einen Injektorkörper und eine darin beweglich angeordnete Injektornadel auf, wobei die Injektornadel zum Einleiten des fluiden Mediums in die Kavität durch den Druck des fluiden Mediums in eine geöffnete Stellung bewegt wird. Vorzugsweise wird ein Injektor mit einer (z.B. hydraulisch) beweglichen Injektornadel verwendet, die einen großen Querschnitt für einen hohen Gasdurchsatz öffnet. Andere Mittel zur Einspeisung des heißen Mediums bzw. Gases sind möglich.

Der Injektor ist vorzugsweise gegenüber der Kunststoffschmelze dicht ausgebildet, damit keine Schmelze in die Zuleitung(en) dringen kann und dort zu Verstopfungen und ggf. Schäden führt.

Weiterhin ist gemäß einer Ausführungsform des Verfahrens vorgesehen, dass das Medium über mehrere Einlassstellen (z.B. in Form von Injektoren) in die Kavität eingeleitet wird (siehe oben), die nebeneinander entlang eines Fließwegs des Materials durch die Kavität angeordnet sind, wobei insbesondere die jeweilige Einlassstelle (z.B. Injektor) mittels eines zugeordneten Einlassventils verschließbar ist.

Hierdurch kann insbesondere die Gasinjektion dynamisch durch die mehreren Einlassventile und Injektoren während des Materialeinblasprozesses gesteuert werden, insbesondere bei Formen bzw. Werkzeugen mit langen Fließwegen. Die Anzahl der Einlass- bzw. Einspritzstellen kann dabei z.B. abhängig der Form der Kavität gewählt werden.

Weiterhin ist gemäß einer Ausführungsform des Verfahrens vorgesehen, dass beim Einleiten des geschmolzenen Materials in die Kavität alle Einlassventile geöffnet sind und das Medium über die Injektoren kontinuierlich in die Kavität eingeleitet wird, wobei die Einlassventile und Injektoren während des Fließens des Materials durch die Kavität nacheinander geschlossen werden, und zwar insbesondere jeweils bevor das Material an dem entsprechenden Injektor ankommt. Dies geschieht z.B. 0 s bis 5 s, vorzugsweise 0 s bis 2 s, am meisten bevorzugt 0 s bis 1 s vor dem Eintreffen des Materials an dem jeweiligen Injektor.

Gemäß einer alternativen Ausführungsform des Verfahrens ist vorgesehen, dass während des Einleitens des geschmolzenen Materials in die Kavität das jeweilige Einlassventil für eine definierte Zeit vor einer Ankunft des Materials an der jeweiligen Einlassstelle geöffnet ist, wobei inbesondere das jeweilige Einlassventil und der jeweilige Inkektor für 0,5 s bis 10s, vorzugsweise 1 s bis 5 s geöffnet ist. Das bedeutet insbesondere, dass die Einlassventile und Injektoren nacheinander geöffnet und geschlossen werden.

Weiterhin ist gemäß einer bevorzugten Ausführungsform des Verfahrens vorgesehen, dass das Material, insbesondere Kunststoffgranulat, vor dem Schmelzen mit einem Treibmittel, insbesondere CO₂, imprägniert wird, so dass das Material beim Einspritzen in die Kavität und dem damit einhergehenden Druckabfall aufschäumt, d.h. eine feine Zellstruktur erhält.

Weiterhin ist gemäß einer Ausführungsform des Verfahrens vorgesehen, dass das Medium nach dem Verlassen der Kavität erneut geheizt und in die Kavität zurückgeführt wird. Das Medium kann somit in nachfolgenden Zyklen wiederverwendet werden.

Im Folgenden sollen Ausführungsformen der Erfindung sowie weitere Merkmale und Vorteile der Erfindung anhand der Figuren erläutert werden. Es zeigen:
- Fig. 1: eine schematische Darstellung einer Ausführungsform der Erfindung, bei der das heiße fluide Medium über ein Einlassventil und einen Injektor in die Kavität gegeben wird, um eine Innenoberfläche des Werkzeugs bzw. der Kavität zu erwärmen, und
- Fig. 2: eine schematische Darstellung einer weiteren Ausführungsform der Erfindung, bei der das heiße fluide Medium über mehrere Einlassventile und Injektoren in die Kavität gegeben wird, um eine Innenoberfläche des Werkzeugs bzw. der Kavität zu erwärmen.

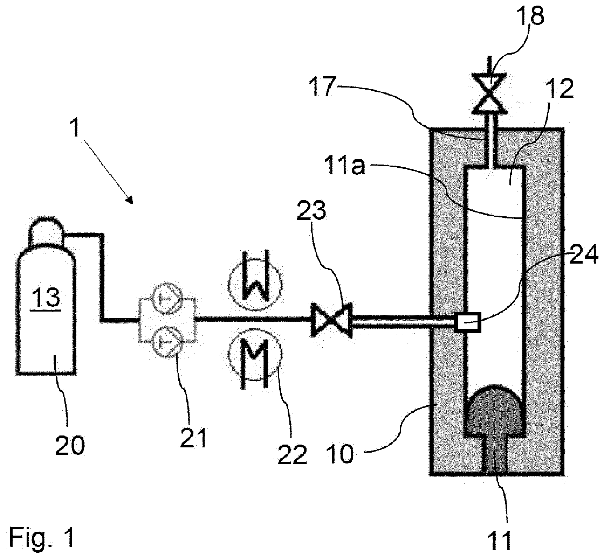

Figur 1 zeigt eine Einrichtung 1 bzw. ein Verfahren zur Herstellung eines Formteils mittels Spritzgießens eines geschmolzenen Materials 11 in einem Werkzeug 10. Das Material weist bevorzugt ein Polymer auf und kann in einer speziellen Ausführungsform mit einem chemischen oder physikalischem Treibmittel beladen worden sein.

Die Einrichtung 1 weist einen Behälter bzw. eine Gasversorgung 20 zum Bereitstellen eines fluiden Mediums 13 auf, einen stromab angeordneten Druckübersetzer 21 zum Einstellen des Drucks des Mediums 13 sowie eine Heizung 22 zum Einstellen der Temperatur des fluiden Mediums 13 auf.

Das heiße Gas bzw. fluide Medium 13, bei dem es sich vorzugsweise um CO₂ oder eines der weiteren hierin offenbarten Medien handelt, wird also vorzugsweise außerhalb des Werkzeugs bzw. der Form 10 erzeugt, aber bevorzugt so nahe wie möglich am Werkzeug 10. Die Beheizung 22 kann z.B. ein elektrisches Heizgerät, eine Heizkeramik oder eine andere geeignete Wärmequelle sein.

Das heiße Gas bzw. Medium 13 kann z.B. vor dem Einleiten des geschmolzenen Materials 11 in die Kavität 12 des Werkzeugs 10 über ein Einlassventil 23 und einen Injektor 24 in die Kavität eingeleitet werden, um die Innenoberfläche 11a der Kavität 12 zu erwärmen. Das Medium 13 weist dabei vorzugsweise eine Temperatur und einen Druck auf, die in den oben offenbarten Bereichen liegen.

Vorzugsweise wird ein Injektor 24 mit einer (z.B. hydraulisch) beweglichen Injektornadel verwendet, die einen großen Querschnitt für einen hohen Gasdurchsatz öffnet. Andere Mittel zur Einspeisung des heißen Gases bzw. fluiden Mediums 13 sind auch möglich.

Das abgekühlte Medium 13 kann die Kavität 12 z.B. durch die Werkzeugtrennebene und/oder durch eine definierte Entlüftung 17 mit einem Ventil 18 am Ende des Strömungsweges verlassen. Dadurch kann der gewünschte Druck im Werkzeug 10 gesteuert werden. Der Druck muss nicht stabil sein und kann sich während der Materialeinspritzung in die Kavität 12 ändern, z.B. kann er abnehmen. Das Entlüftungsventil 18 kann abwechselnd öffnen und schließen oder dergestalt dynamisch geregelt werden, dass sich ein gewünschter Druck oder Druckverlauf in der Kavität 12 einstellt. Es kann z.B. ein Magnetventil oder ein pneumatisch betätigtes Ventil sein.

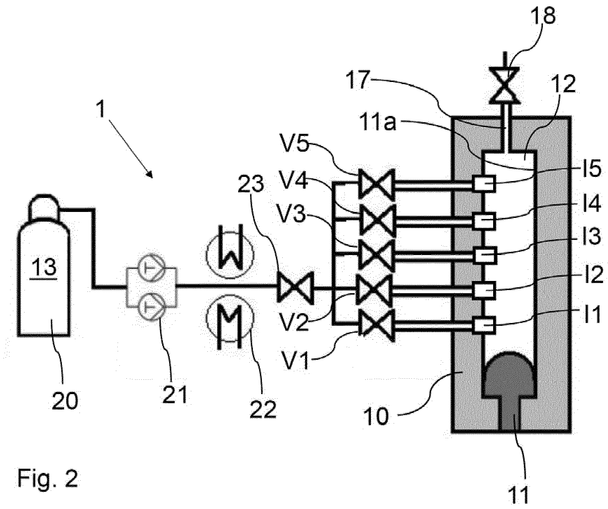

Wie anhand der Figur 2 ersichtlich ist, kann die Injektion des fluiden Mediums bzw. Gases 13 auch dynamisch durch mehrere Einlassventile V1, ..., V5 bzw. Injektoren I1, ...., I5 während des Einleitens des geschmolzenen Materials 11 in die Kavität 12 des Werkzeugs 10 gesteuert werden, die entlang des Fließwegs angeordnet sind, insbesondere bei Formen mit langen Fließwegen. Die Anzahl der Einspritzpunkte bzw. Einlasstellen I1, ..., I5 (z.B. Injektoren), die den Ventilen V1, ..., V5 zugeordnet sind, kann dabei z. B. in Abhängigkeit von der Form der Kavität 12 gewählt werden.

Hinsichtlich der in der Figur 2 gezeigten Einrichtung 1 sind z.B. die folgenden Betriebsarten möglich:
a) Während der Injektion des Materials bzw. Polymers 11 in die Kavität 12 sind alle Einlassventile V1, ..., V5 sowie Injektoren I1, ..., I5 geöffnet und es strömt kontinuierlich heißes fluides Medium (z.B. CO₂) in die Kavität 12 über die Injektoren I1, ..., I5. Während des Fließens der Schmelze 11 durch die Kavität 12 werden die Einlassventile V1, ..., V5 sowie Injektoren I1, ..., I5 (beginnend mit V1 bzw. I1) nacheinander geschlossen, kurz bevor das Material am jeweiligen Injektor I1, ..., I5 ankommt. Dies geschieht 0 s bis 5 s, vorzugsweise 0 s bis 2 s, am meisten bevorzugt 0 s bis 1 s vor dem Eintreffen des Materials 11 am jeweiligen Injektor I1, ..., I5.
b) Während der Injektion des Materials 11 sind die Einlassventile V1, ..., V5 sowie Injektoren I1, ..., I5 für eine definierte Zeit vor der Ankunft des Materials 11 am jeweiligen Injektor I1, ...., I5 geöffnet. Sie können für 0,5 s bis 10 s, vorzugsweise 1 s bis 5 s geöffnet werden. Das bedeutet im Beispiel, dass die Ventile V1 bis V5 nacheinander öffnen und schließen, wobei zum gleichen Zeitpunkt mehr als ein Ventil bzw. Injektor geöffnet sein kann.

Im Vergleich zu den derzeit kommerziell genutzten Heiztechnologien ermöglicht die Erfindung mit Vorteil einen geringeren Energieverbrauch, da nur ein vergleichsweise dünner Wandabschnitt 11a (mehrere Millimeter) erwärmt und gekühlt werden muss. Komplexe Formen können daher mit wesentlich geringeren Kosten für die Herstellung der Form und der Formeinsätze erwärmt werden. Weiterhin sind kürzere Aufheizzeiten möglich und es ergeben sich niedrigere Kosten für die Heizungsanlage.

Die Erwärmung des Werkzeugs mit CO₂ oder N₂ mit den hierein spezifizierten Parametern führt zu minimalen Heizzeiten bei minimalen Gasverlusten/Verbrauch.

Im Gegensatz zur Verwendung von Luft oder einem Gas, das erhebliche Mengen an Sauerstoff enthält, wird durch die Verwendung von Inertgasen eine Oxidation des Materials/Polymers 11 beim Einspritzen vermieden, ebenso wie eine Beeinträchtigung der oftmals polierten oder fein strukturierten Werkzeugoberfläche.

Eine Rückführung des Heizgases/-mediums 13 mit einem weiteren Heizschritt kann durchgeführt werden, um den Gasverbrauch weiter zu reduzieren.

## Patentansprüche

1. Verfahren zum Herstellen eines Formteils, aufweisend die Schritte:
- Bereistellen eines Materials (10), das ein Polymer aufweist,
- Erwärmen einer Innenoberfläche (11a) einer Kavität (12) eines Werkzeugs (11) durch Einleiten eines fluiden Mediums (13) in die Kavität (12), wobei das Medium (13) zumindest einen oder mehrere der folgenden Stoffe aufweist: CO₂, N₂, Ar; und
- Einspritzen des geschmolzenen Materials (10) in die Kavität (12) des Werkzeugs (11) zum Ausbilden des Formteils nach oder während des Einleitens des fluiden Mediums (13) in die Kavität (12).

2. Verfahren nach Anspruch 1, **dadurch gekennzeichnet, dass** das fluide Medium (13) gasförmig oder überkritisch ist.

3. Verfahren nach Anspruch 1 oder 2, **dadurch gekennzeichnet, dass** der mindestens eine Stoff zumindest 90 Vol.-%, insbesondere zumindest 95 Vol.-%, des fluiden Mediums (13) ausmacht; oder dass die mehreren Stoffe zusammengenommen zumindest 90%, insbesondere zumindest 95 Vol.-%, des fluiden Mediums (13) ausmachen.

4. Verfahren nach einem der vorhergehenden Ansprüche, **dadurch gekennzeichnet, dass** das fluide Medium (13) Sauerstoff mit einem Gehalt aufweist, der kleiner oder gleich 10 Vol.-% ist, insbesondere kleiner oder gleich 5 Vol.-%, insbesondere kleiner oder gleich 2 Vol.-%.

5. Verfahren nach einem der vorhergehenden Ansprüche, **dadurch gekennzeichnet, dass** das fluide Medium (13) beim Einleiten in die Kavität (12) eine Temperatur im Bereich von 150°C bis 600 °C, insbesondere im Bereich von 200°C bis 400 °C, aufweist.

6. Verfahren nach einem der vorhergehenden Ansprüche, **dadurch gekennzeichnet, dass** der Druck des fluiden Mediums (13) in der Kavität (12) des Werkzeugs (11) im Bereich von 1 bar bis 40 bar liegt, insbesondere im Bereich von 5 bar bis 30 bar, insbesondere im Bereich von 10 bar bis 25 bar.

7. Verfahren nach einem der vorhergehenden Ansprüche, **dadurch gekennzeichnet, dass** das in die Kavität (12) des Werkzeugs (11) eingeleitete Medium (13) durch die Kavität (12) strömt und die Innenoberfläche (11a) des Werkzeugs (11) erwärmt und die Kavität (12) über eine Trennlinie des Werkzeugs (11) und/oder über zumindest eine Entlüftungsöffnung (17) des Werkzeugs (11) verlässt.

8. Verfahren nach einem der vorhergehenden Ansprüche, **dadurch gekennzeichnet, dass** das fluide Medium (13) außerhalb des Werkzeugs (11) erwärmt wird.

9. Verfahren nach einem der vorhergehenden Ansprüche, **dadurch gekennzeichnet, dass** das fluide Medium (13) über zumindest ein Einlassventil (23) in die Kavität (12) des Werkzeugs (11) eingeleitet wird.

10. Verfahren nach einem der Ansprüche 1 bis 8, **dadurch gekennzeichnet, dass** das Medium (13) über mehrere Injektoren (I1,..., I5) in die Kavität (12) des Werkzeugs (11) eingeleitet wird, die nebeneinander entlang eines Fließwegs des Materials (10) durch die Kavität (12) angeordnet sind, wobei die Zufuhr des fluiden Mediums (13) zu dem jeweiligen Injektor (I1, ..., I5) mittels eines dem jeweiligen Inkektor (I1,...,I5) zugeordneten Einlassventils (V1, ..., V5) absperrbar ist.

11. Verfahren nach Anspruch 10, **dadurch gekennzeichnet, dass** beim Einleiten des geschmolzenen Materials (10) in die Kavität (12) des Werkzeugs (11) alle Einlassventile (V1, ... , V5) und Injektoren (I1, ..., I15) geöffnet sind und das Medium (11) über die Injektoren (I1, ..., I5) kontinuierlich in die Kavität (12) des Werkzeugs (11) eingeleitet wird, wobei die Einlassventile (V1, ..., V5) und Injektoren (I1, ..., I5) während des Fließens des Materials (10) durch die Kavität (12) nacheinander geschlossen werden, und zwar insbesondere jeweils bevor das Material (10) an dem entsprechenden Injektor (I1, ..., I5) ankommt.

12. Verfahren nach Anspruch 10, **dadurch gekennzeichnet, dass** die Einlassventile (V1, ..., V5) und Injektoren (I1, ..., I5) während des Einleitens des Materials (10) in die Kavität (12) für eine vordefinierte Zeit vor einer Ankunft des Materials (10) an dem jeweiligen Injektor (I1, ..., I5) geöffnet werden, wobei die Einlassventile (V1, ..., V5) und Injektoren (I1, ..., I5) nacheinander geöffnet werden.

13. Verfahren nach einem der Ansprüche 10 bis 12, **dadurch gekennzeichnet, dass** über das jeweilige Einlassventil (V1, ..., V5) und den jeweiligen Injektor (I1, ..., I5) fluides Medium (13) für 0,5 s bis 10 s, vorzugsweise für 1 s bis 5 s, in die Kavität (12) eingespeist wird und der jeweilige Inkektor (I1, ..., I5) sowie das dem jeweiligen Injektor zugeordnete Einlassventil (V1, ..., V5) 0 s bis 5 s, vorzugsweise 0 s bis 2 s, am meisten bevorzugt 0 s bis 1 s, vor dem Eintreffen des Materials (10) an dem entsprechenden Injektor (I1, ..., I5) wieder geschlossen werden.

14. Verfahren nach einem der vorhergehenden Ansprüche, **dadurch gekennzeichnet, dass** das Material (10) vor der Injektion in die Kavität (12) mit einem chemischen oder physikalischen Treibmittel, insbesondere CO₂, beladen wird, so dass das Formteil beim Formen in dem Werkzeug (11) eine Zellstruktur erhält.

15. Verfahren nach einem der vorhergehenden Ansprüche, **dadurch gekennzeichnet, dass** das fluide Medium (13) nach dem Verlassen der Kavität (12) erneut erwärmt wird und in die Kavität (12) zurückgeführt wird.
